# EUROPÄISCHE PATENTSCHRIFT

(11) **EP 3 927 607 B1**
(45) Veröffentlichungstag und Bekanntmachung des Hinweises auf die Patenterteilung: **22.05.2024**
(21) Anmeldenummer: 19828577.7
(22) Anmeldetag: 07.12.2019
(51) Int. Cl.: B62J 45/414, B62J 45/415

(54) **VERFAHREN, SYSTEM UND COMPUTERPROGRAMMPRODUKT ZUR BESTIMMUNG DER POSITION EINES AUFSASSEN AUF EINEM FAHRZEUG**
METHOD, SYSTEM AND COMPUTER PROGRAM PRODUCT FOR DETERMINING THE POSITION OF A PASSENGER IN A VEHICLE
PROCÉDÉ, SYSTÈME ET PRODUIT DE LOGICIEL POUR DÉTERMINER LA POSITION D'UN CONDUCTEUR SUR UN VÉHICULE

(30) Priorität: 21.02.2019 DE 102019202330
(43) Veröffentlichungstag der Anmeldung: 29.12.2021
(73) Patentinhaber: Robert Bosch GmbH, 70442 Stuttgart (DE)
(72) Erfinder: MAYER, Florian, 71254 Ditzingen (DE)
(86) Internationale Anmeldenummer: PCT/EP2019/084104
(87) Internationale Veröffentlichungsnummer: WO 2020/169227

(56) Entgegenhaltungen:
- DE-A1-102013 200 157
- JP-A- H02 299 992
- JP-A- 2017 178 284
- US-A1- 2002 180 166
- US-A1- 2005 121 866

## Beschreibung

Die Erfindung bezieht sich auf ein Verfahren zur Bestimmung der Position eines Aufsassen auf einem Fahrzeug.

### Stand der Technik

Es ist bekannt, dass das Fahrverhalten von Motorrädern unter anderem von der Sitzposition des Fahrers abhängt. Bei Bremsvorgängen mit hoher Verzögerung wird der Fahrer nach vorne gedrückt, wodurch sich der Gesamtschwerpunkt des Gesamtsystems, bestehend aus Motorrad und Fahrer, verändert. Gleiches gilt bei Kurvenfahrten, je nachdem, ob der Fahrer aufrecht auf dem Motorrad sitzt oder sich stärker oder weniger stark als das Motorrad in die Kurve legt.

Bekannt sind des Weiteren verschiedene sensorbasierte Schutzerkennungssysteme für Motorräder. Beispielsweise die EP 2 079 613 B1 offenbart, in eine Schutzkleidungsjacke, die vom Fahrer getragen wird, eine Sensorik zu integrieren, wobei aus den gemessenen Winkelgeschwindigkeiten ein Risikoindex ermittelt wird, mit dem ein Sturz prognostiziert werden kann.

Aus der DE 102 10 975 A1 ist ein personenindividuelles Notfallerkennungssystem bekannt, das eine in dem Schutzhelm integrierte Sensorik umfasst, wobei für den Fall, dass die Sensorik Grenzwerte überschreitende Sensorsignale liefert, eine Notruffunktion eingeleitet wird.

Die US 88 60 570 B2 offenbart ein Kollisionserfassungssystem, das in einem Schutzhelm integriert ist, wobei Sensorsignale einer in den Schutzhelm integrierten Sensorik per Funk auf eine außerhalb gelegene Empfangsstation übertragen werden.

Aus der gattungsgemäßen JP 2017 178284 A ist es bekannt, die Position eines Aufsassen, der auf dem Sattel eines Fahrzeugs sitzt, mithilfe einer umfangreichen Personensensorik zu bestimmen, deren Sensorsignale auf das Fahrzeug übertragen werden. Die Personensensorik erlaubt es, die Hüftposition des Aufsassen zu ermitteln. Darüber hinaus kann über einen Kopfsensor die Kopfposition des Aufsassen bestimmt werden.

Aus der US 2002/180166 A1 ist es bekannt, die Position eines Zweiradfahrers anhand des Gesamtschwerpunkts zu ermitteln. Hierbei werden die Schwerpunktposition und die Massenverschiebung durch den Aufsassen in Bezug auf das Fahrzeug gemessen.

### Offenbarung der Erfindung

Mithilfe des erfindungsgemäßen Verfahrens kann die Position eines Aufsassen auf einem Fahrzeug selbsttätig bestimmt werden. Der Begriff "Aufsasse" bezeichnet einen Fahrer, dessen Beine den Fahrersitz zwischen sich einschließen. Soweit im Folgenden "Fahrer" verwendet wird, ist mit diesem Begriff ein Aufsasse gemeint.

Die Erfindung bezieht sich auf Fahrzeuge, die insbesondere als Einspurfahrzeuge ausgebildet sind, vorzugsweise auf Motorräder oder sonstige motorisierte Zweiräder wie beispielsweise Motorroller. In Betracht kommen auch nicht-motorisierte Fahrzeuge wie beispielsweise Fahrräder. Außerdem bezieht sich die Erfindung auf Fahrzeuge wie beispielsweise Quads oder Schneefahrzeuge wie zum Beispiel Motorschlitten.

Bei dem Verfahren wird die Position eines Aufsassen auf einem Fahrzeug als Funktion von personenbezogenen Sensorsignalen und fahrzeugbezogenen Sensorsignalen ermittelt. Die personenbezogenen Sensorsignale stammen von einem Personensensor, der von dem Aufsassen getragen wird, beispielsweise in einem Schutzbekleidungsstück wie einer Schutzjacke, einer Schutzhose, einem Schutzhelm oder in einem Rucksack, den der Fahrer trägt. Die fahrzeugbezogenen Sensorsignale stammen von einem Fahrzeugsensor, der an dem Fahrzeug fest angeordnet ist.

Unter Berücksichtigung der personenbezogenen mit den fahrzeugbezogenen Sensorsignalen ist es möglich, die aktuelle Position des Aufsassen auf dem Fahrzeug zu ermitteln. Es kann über einen Vergleich eine Abweichung zwischen den personenbezogenen und den fahrzeugbezogenen Sensorsignalen ermittelt und der Änderung der Aufsassenposition von einer Sollposition zugrunde gelegt.

Bei der Sollposition des Aufsassen handelt es sich um eine standardisierte Position, bei der der Aufsasse insbesondere in Querrichtung symmetrisch auf dem Fahrzeug sitzt, so dass die Längsmittelebene (Sagittalebene), welche von der Längsachse und der Hochachse aufgespannt wird, des Aufsassen mit der Längsmittelebene des Fahrzeugs zusammenfällt. Des Weiteren wird bei der Sollposition eine definierte Körperhaltung vorausgesetzt, bei der der Oberkörper in einer definierten Weise um seine Querachse in Hüfthöhe geneigt ist.

Die personenbezogenen und die fahrzeugbezogenen Sensorsignale müssen fahrsituationsabhängig in einem bestimmten Verhältnis zueinander stehen, damit der Aufsasse sich in der Sollposition befindet. Das Verhältnis zwischen den personenbezogenen und den fahrzeugbezogenen Sensorsignalen kann auf verschiedene Weise berechnet werden. Weichen beispielsweise die personenbezogenen von den fahrzeugbezogenen Sensorsignalen in einer definierten Weise voneinander ab, so stimmt die Position des Aufsassen nicht mit der Sollposition zusammen. Aus der Abweichung der Sensorsignale kann auf die Abweichung der aktuellen Position des Aufsassen von der Sollposition geschlossen werden. Liegen dagegen die personenbezogenen und die fahrzeugbezogenen Sensorsignale hinreichend nahe beieinander, so stimmt auch die Position des Aufsassen mit der Sollposition überein.

Diese Vorgehensweise erlaubt es, selbsttätig und fortlaufend die Position des Aufsassen auf dem Fahrzeug zu bestimmen, woraufhin in Abhängigkeit der aktuellen Position verschiedene Maßnahmen ergriffen werden können. So ist es beispielsweise möglich, Kennlinien in einem die Fahrdynamik des Fahrzeugs beeinflussenden Aggregat als Funktion der Position des Aufsassen einzustellen. Zum Beispiel kann das Bremsverhalten oder das Beschleunigungsverhalten positionsabhängig modifiziert werden, beispielsweise dahingehend, dass bei einer asymmetrischen Sitzposition nur reduzierte Maximalbeschleunigungen oder Maximalverzögerungen zulässig sind.

Gemäß eines weiteren Aspekts kann bei einem Abweichen der Aufsassenposition von der Sollposition selbsttätig ein Eingriff in die Fahrdynamik des Fahrzeugs durchgeführt werden. Es ist zum Beispiel möglich, bei einer asymmetrischen Sitzposition selbsttätig einen Bremsvorgang auszulösen.

Gemäß noch eines weiteren Aspektes der Erfindung kann eine von der Sollposition abweichende Sitzposition des Aufsassen zur Erzeugung eines Warnsignals herangezogen werden, das dem Fahrer zur Anzeige gebracht werden kann. Das Warnsignal kann gegebenenfalls auch aufgezeichnet oder auf eine Einrichtung außerhalb des Fahrzeugs übertragen werden.

Gemäß noch einer weiteren vorteilhaften Ausführung fließt die aktuelle Aufsassenposition in ein Fahrer-Fahrzeug-Modell ein, mit dem kinematische oder kinetische Größen ermittelt werden können, die zum Beispiel im Rahmen eines Fahrerassistenzsystems Verwendung finden.

Da der Aufsasse in der Sollposition eine definierte Haltung einnimmt, in der beispielhaft die Achsen seines personenbezogenen Koordinatensystems winklig zu den Achsen des fahrzeugbezogenen Koordinatensystems ausgerichtet sind, kann bereits in der Sollposition eine Abweichung zwischen personenbezogenen und fahrzeugbezogenen Sensorsignalen vorliegen, die jedoch in einem definierten funktionalen Zusammenhang stehen. Eine von der Sollposition differierende Aufsassenposition liegt dann vor, falls der definierte funktionale Zusammenhang zwischen den personenbezogenen und fahrzeugbezogenen Sensorsignalen nicht mehr gegeben ist.

Es werden gleichartige Sensorsignale miteinander verglichen. Vorteilhafterweise werden als Sensorsignale Beschleunigungswerte in Längs-, Quer- und/oder Hochrichtung verglichen. Zusätzlich oder alternativ kann es auch zweckmäßig sein, Drehraten um die Längs-, Quer- und/oder Hochachse als Sensorsignale miteinander zu vergleichen.

Es kann zweckmäßig sein, personenbezogene Sensorsignale von verschiedenen Personensensoren, die zueinander beabstandet sind, bei der Bestimmung der Aufsassenposition zu berücksichtigen. Beispielsweise kann über Personensensoren an den Extremitäten die aktuelle Position der Arme oder Beine festgestellt werden. Vorteilhafterweise ist aber zumindest ein Personensensor an der Längsmittelebene des Aufsassen vorhanden, wobei sich der Personensensor beispielsweise im Brustbereich in Höhe des Sternums oder im Rückenbereich in Höhe der Wirbelsäule befindet und zum Beispiel in eine Schutzjacke integriert ist.

Fahrzeugseitig genügt es, nur einen Fahrzeugsensor vorzusehen. Gegebenenfalls ist es auch möglich, dass mehrere Sensoren an unterschiedlichen Positionen des Fahrzeugs angeordnet sind.

Jeder Sensor - sowohl der Personensensor als auch der Fahrzeugsensor - kann als eine Sensorik ausgebildet sein, mit der mehrere Zustandsgrößen erfasst werden können. Hierbei ist es insbesondere zweckmäßig, dass mit jeder Sensorik Beschleunigungen entlang der Längsachse, der Querachse und der Hochachse und gegebenenfalls zusätzlich Drehraten um die Längsachse, die Querachse und die Hochachse ermittelt werden können.

Gemäß noch einer weiteren vorteilhaften Ausführung kann das Verfahren sowohl bei stillstehendem Fahrzeug als auch während der Fahrt durchgeführt werden. Bei stillstehendem Fahrzeug oder bei Fahrten mit konstanter Geschwindigkeit können als Sensorsignale ausschließlich Beschleunigungswerte miteinander verglichen werden, was grundsätzlich ausreicht, um eine Positionsabweichung des Aufsassen von der Sollposition zu ermitteln. Beispielsweise lässt sich ein stark nach vorne gebeugter Oberkörper über eine Aufteilung des Gewichtskraftvektors mit Anteilen auf die personenbezogene Längsachse und Hochachse feststellen. Zusätzlich wird zur Normierung über entsprechende Komponenten des Fahrzeugs-Gewichtskraftvektors auf die einzelnen Fahrzeugachsen die Neigung des Fahrzeugs bestimmt. Aus der Kombination von fahrzeugbezogenen Beschleunigungssignalen und personenbezogenen Beschleunigungssignalen kann die Lage des Körperteils, an welchem sich der Personensensor befindet, bestimmt werden.

Grundsätzlich möglich ist es auch bei stillstehendem Fahrzeug oder bei Fahrten mit konstanter Geschwindigkeit, über die Beschleunigungssignale hinaus weitere Sensorsignale zu berücksichtigen, beispielsweise die Drehraten um die Längs-, Quer- und/oder die Hochachse.

Gemäß noch einer weiteren vorteilhaften Ausführung werden zur Ermittlung der Position des Aufsassen bei bremsendem oder beschleunigendem Fahrzeug Beschleunigungswerte und zusätzlich der Neigungswinkel um die Querachse (Nickwinkel) berücksichtigt. Hierdurch wird einer geänderten Oberkörperhaltung aufgrund der auftretenden Längskräfte Rechnung getragen. Gegebenenfalls kann es zweckmäßig sein, zusätzliche Sensorsignale zu berücksichtigen, insbesondere die Drehraten um die Längs-, Quer- und/oder Hochachse. Gemäß noch einer weiteren vorteilhaften Ausführung werden zur Ermittlung der Position des Aufsassen bei Kurvenfahrt Beschleunigungswerte und zusätzlich der Neigungswinkel um die Längsachse (Wankwinkel) berücksichtigt. Bei Kurvenfahrten können grundsätzlich verschiedene Sitzpositionen des Aufsassen unterschieden werden, nämlich eine aufrechte Sitzposition, bei der die Hochachse des Fahrzeugs in der Sagittalebene des Fahrers liegt, eine in Kurvenrichtung stärker geneigte Sitzposition des Aufsassen oder eine entgegen der Kurvenneigung nach außen geneigte Sitzposition des Aufsassen. Über den Neigungswinkel um die Längsachse sowohl des Fahrzeugs als auch des Aufsassen kann die entsprechende Sitzkategorie des Aufsassen festgelegt werden.

Die Erfindung bezieht sich des Weiteren auf ein Positionsbestimmungssystem zur Bestimmung der Position des Aufsassen auf dem Fahrzeug, das zur Durchführung des vorbeschriebenen Verfahrens geeignet ist Das Positionsbestimmungssystem umfasst mindestens einen Fahrzeugsensor zur Erzeugung fahrzeugbezogener Sensorsignale und mindestens einen Personensensor zur Erzeugung personenbezogener Sensorsignale sowie ein Steuergerät, dem die fahrzeugbezogenen und personenbezogenen Sensorsignale zuführbar sind. In dem Steuergerät ist die Position des Aufsassen auf dem Fahrzeug als Funktion der personenbezogenen und der fahrzeugbezogenen Sensorsignale ermittelbar. Das Positionsbestimmungssystem kann gegebenenfalls mehrere Personensensoren umfassen, die insbesondere zueinander beabstandet sind. Der Personensensor kann als eine Personensensorik ausgebildet sein, mit der verschiedene Zustandsgrößen als Sensorsignale ermittelbar sind, zum Beispiel die Beschleunigungen in den drei Raumrichtungen und die Drehraten um die drei Raumrichtungen. Gleiches gilt für den Fahrzeugsensor.

Die Erfindung bezieht sich schließlich auf ein Computerprogrammprodukt mit einem Programmcode, der dazu ausgelegt ist, die vorbeschriebenen Verfahrensschritte durchzuführen. Das Computerprogrammprodukt läuft in einem Steuergerät des Positionsbestimmungssystems ab.

Bei dem Steuergerät des Positionsbestimmungssystems kann es sich gegebenenfalls um ein Fahrzeugsteuergerät handeln, das auch weitere Funktionen im Fahrzeug steuert, beispielsweise das Steuergerät eines Fahrerassistenzsystems.

Die Signalübertragung von dem Personensensor zum Steuergerät erfolgt vorzugsweise drahtlos.

Weitere Vorteile und zweckmäßige Ausführungen sind den weiteren Ansprüchen, der Figurenbeschreibung und den Zeichnungen zu entnehmen. Es zeigen:
- Fig. 1: in Seitenansicht ein Motorrad mit Fahrer, wobei in das Motorrad eine Fahrzeugsensorik integriert ist und sowohl im Helm als auch in der Schutzjacke des Fahrers jeweils eine Sensorik integriert ist, deren Signale per Funk auf ein Steuergerät übertragen werden,
- Fig. 2: das Motorrad und der Fahrer in einer Ansicht von vorne,
- Fig. 3: das Motorrad und der Fahrer im Stillstand, wobei der Fahrer eine aufrechte Haltung einnimmt,
- Fig. 4: eine Fig. 1 entsprechende Darstellung von Motorrad und Fahrer, jedoch mit zusätzlichen Sensoriken am Fahrer im Bereich der Arme und der Beine,
- Fig. 5: in Seitenansicht Motorrad und Fahrer während eines starken Bremsvorgangs,
- Fig. 6: Motorrad und Fahrer in einer Ansicht von vorne während einer Kurvenfahrt, mit dem Fahrer in neutraler Haltung,
- Fig. 7: Motorrad und Fahrer in einer Ansicht von hinten bei Kurvenfahrt, mit dem Fahrer entgegengesetzt geneigt zur Kurve.

In den Figuren sind gleiche Bauteile mit gleichen Bezugszeichen versehen.

Die folgenden Ausführungsbeispiele beziehen sich auf ein als Motorrad ausgeführtes Einspurfahrzeug und auf einen Motorradfahrer als Aufsassen.

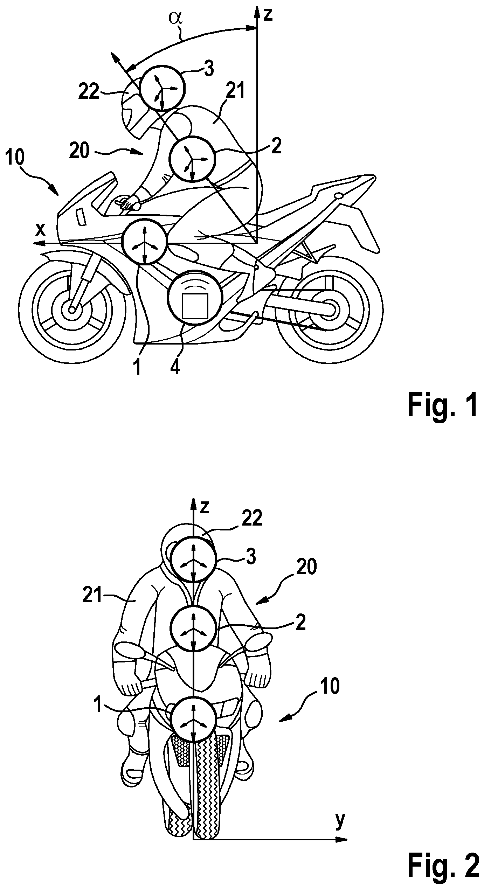

In den Fig. 1 und 2 sind ein Motorrad 10 und ein Motorradfahrer bzw. Aufsasse 20 in einer üblichen Fahrposition dargestellt, wobei die Position des Motorradfahrers 20 auf dem Motorrad 10 eine Sollposition ist. Das Koordinatensystem ist in an sich üblicher Weise mit der X-Achse als Längsachse, der Y-Achse als Querachse und der Z-Achse als Hochachse dargestellt. Im Motorrad 10 befindet sich eine Fahrzeugsensorik 1, mit der Beschleunigungen in allen drei Achsrichtungen sowie die Drehraten um die drei Achsrichtungen ermittelt werden können.

Die Schutzjacke 21 des Motorradfahrers 20 ist mit einer Personensensorik 2 versehen, die analog zur Fahrzeugsensorik 1 Beschleunigungen und Drehraten in bzw. um alle drei Achsrichtungen ermitteln kann, wobei das personenbezogene Achssystem aufgrund der geneigten Oberkörperhaltung des Motorradfahrers gegenüber dem motorradeigenen Achssystem um die Querachse gekippt ist, was in Fig. 1 anhand des Neigungswinkels α zwischen der motorradeigenen Hochachse und der fahrerbezogenen Hochachse dargestellt ist.

Des Weiteren ist in den Helm 22 des Motorradfahrers 20 eine weitere Personensensorik 3 integriert, die ebenfalls die Beschleunigungen und Drehraten in bzw. um alle drei Achsen ermitteln kann.

In das Motorrad 10 ist außerdem ein Steuergerät 4 integriert, das die Sensorsignale sämtlicher Sensoren 1, 2 und 3 empfängt und auswertet. Mit der Sensorik 1 im Fahrzeug ist das Steuergerät 4 über das fahrzeugeigene Bussystem verbunden. Die Sensorsignale der Sensoriken 2 und 3 in der Schutzjacke 21 bzw. im Helm 22 werden drahtlos auf das Steuergerät 4 übertragen, wofür in der Schutzjacke 21 und dem Helm 22 jeweils Sendeeinheiten und in dem Steuergerät 4 eine Empfangseinheit integriert sind.

Wie der Darstellung gemäß Fig. 2 zu entnehmen, fallen in der Sollposition des Motorradfahrers 20, die in den Fig. 1 und 2 dargestellt ist, die Hochachse Z des Motorrads 10 und die Hochachse Z des Motorradfahrers 20 zusammen.

Die Position des Motorradfahrers 20 auf dem Motorad 10, insbesondere Abweichungen von der dargestellten Sollposition, können durch Auswerten der Sensorsignale der Fahrzeugsensorik 1 und der Personensensoriken 2 und 3 ermittelt werden.

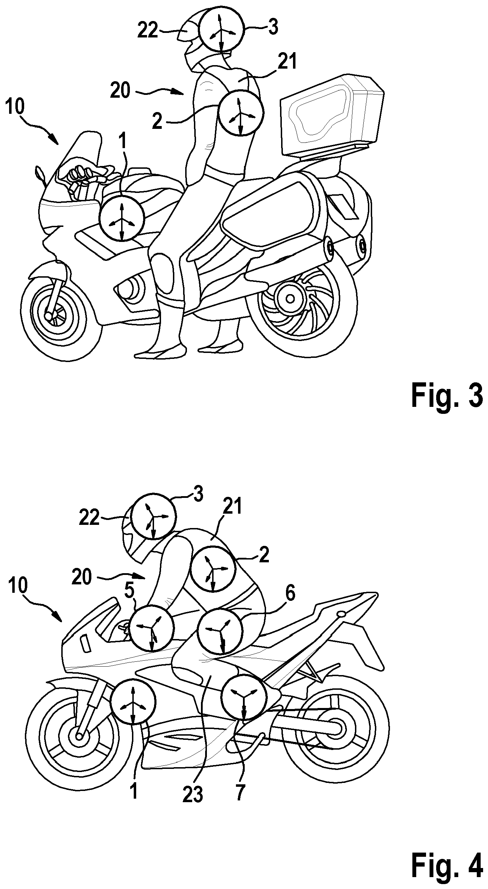

In Fig. 3 befindet sich das Motorrad 10 im Stillstand, der Motorradfahrer 20 nimmt eine aufrechte Haltung ein, in der der Oberkörper aufrechter als in der Sollposition gemäß den Fig. 1 und 2 positioniert ist. Gegenüber der Sollposition ist der Beschleunigungsanteil in der Personensensorik 2 und 3, der auf die Gewichtskraft zurückgeht, entlang der Z-Achse größer als in der Sollposition. Über die fahrzeugeigene Sensorik 1 kann die aufrechte Position des Motorrades festgestellt werden. In Kombination der Sensorsignale der motorradeigenen Sensorik und der Personensensoriken 2 und 3 kann die Relativposition des Fahrers 20 auf dem Motorrad 10 und damit festgestellt werden, wie stark der Fahrer gegenüber der Sollposition aufgerichtet ist oder ob der Fahrer gegenüber der Sollposition nach links oder rechts geneigt ist, also einen positiven oder negativen Wankwinkel um die Längsachse aufweist. Hierbei genügt es grundsätzlich, lediglich Beschleunigungssignale der Sensoriken zu berücksichtigen.

Gleiches gilt auch für eine Fahrt mit konstanter Geschwindigkeit.

Die Sensorsignale können beispielsweise im Steuergerät 4 in der Weise verarbeitet werden, dass ein Aggregat des Fahrzeugs, welches die Fahrdynamik beeinflusst, angesteuert wird. Hierbei können entweder Kennlinien des Aggregats geändert werden, oder es wird unmittelbar in das Aggregat eingegriffen, um den Fahrzustand zu beeinflussen. Bei dem Aggregat handelt es sich beispielsweise um die Fahrzeugbremse oder das Antriebssystem.

In Fig. 4 sind zusätzliche Sensoren in der Schutzbekleidung des Motorradfahrers 10 angeordnet. Eine Personensensorik 5 befindet sich jeweils im linken und rechten Ärmel der Schutzjacke 21, eine weitere Personensensorik 6 befindet sich jeweils am linken und rechten Oberschenkel der Schutzhose 23 und noch eine Personensensorik 7 jeweils am linken und rechten Unterschenkel der Schutzhose 23. Dies ermöglicht es, die aktuelle Position der Arme und der Beine insbesondere eine Abweichung von einer Sollposition festzustellen.

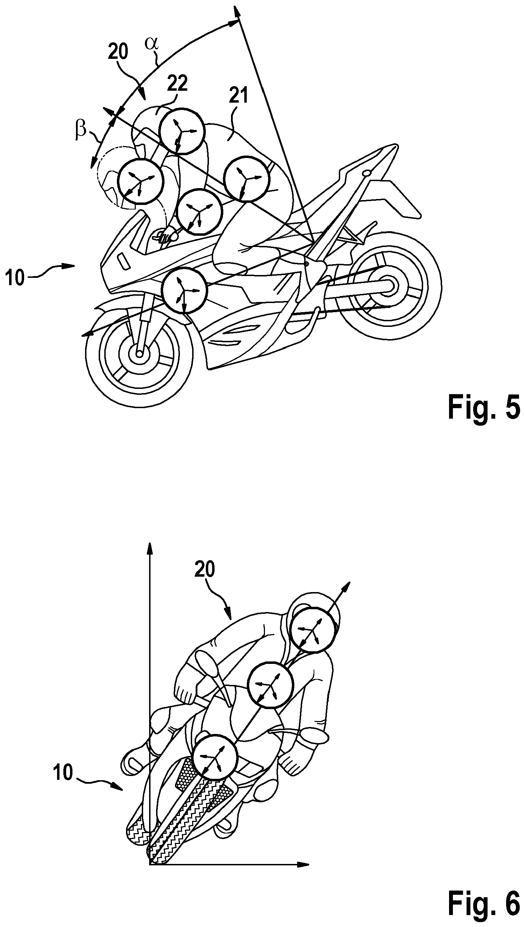

In Fig. 5 ist eine dynamische Fahrsituation während eines Bremsvorgangs dargestellt. Durch die Bremskräfte wird der Oberkörper des Motorradfahrers 20 gegenüber der Sollposition nach vorne gekippt, wodurch sich der Neigungswinkel des Oberkörpers um die Querachse, der in der Sollposition den Wert α einnimmt, um den Wert β erhöht. Diese relative Winkeländerung, bezogen auf das Motorrad 10, kann auch bei dem dargestellten starken Bremsmanöver mit Abheben des Hinterrades des Motorrades 10 festgestellt werden. Hierbei werden über die Fahrzeugsensorik die entsprechenden Zustandsgrößen ermittelt, insbesondere der Nickwinkel um die Fahrzeugquerachse, was bei der Berechnung des zusätzlichen Neigungswinkels β des Motorradfahrers 20 berücksichtigt wird.

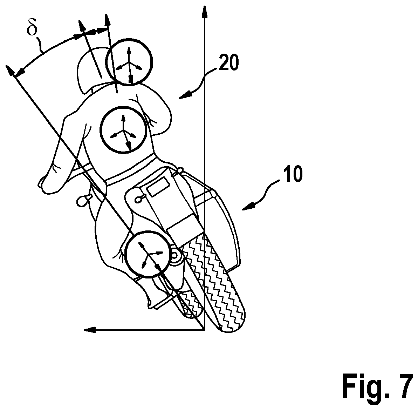

In den Fig. 6 und 7 ist eine Kurvenfahrt des Motorrades 10 und des Motorradfahrers 20 dargestellt. In Fig. 6 befindet sich der Motorradfahrer 20 in der Solllage, in der die Hochachse des fahrereigenen Koordinatensystems mit der Hochachse des motorradeigenen Koordinatensystems zusammenfällt. In Fig. 7 ist dagegen der Oberkörper des Motorradfahrers 20 um die Längsachse um den Winkelbetrag δ entgegengesetzt zur Motorradneigung gekippt. Der Fahrer lehnt sich somit bei der Kurvenfahrt entgegengesetzt zur Neigung des Motorrades nach außen. Auch diese Fahrsituation kann mithilfe der Personensensorik in Verbindung mit der Fahrzeugsensorik festgestellt werden.

Gleiches gilt für die umgekehrte Fahrsituation mit einem Neigen des Oberkörpers zur kurveninneren Seite, bei der der Oberkörper des Motorradfahrers um einen entsprechenden Neigungswinkel nach innen gegenüber der Sollposition gekippt ist.

## Patentansprüche

1. Verfahren zur Bestimmung der Position eines Aufsassen (20) auf einem Fahrzeug (10), bei dem mithilfe mindestens eines vom Aufsassen (20) getragenen Personensensors (2, 3, 5, 6, 7) personenbezogene Sensorsignale ermittelt und mithilfe mindestens eines am Fahrzeug (10) angeordneten Fahrzeugsensors (1) fahrzeugbezogene Sensorsignale ermittelt werden, wobei die Position des Aufsassen (20) auf dem Fahrzeug (10) als Funktion der personenbezogenen und der fahrzeugbezogenen Sensorsignale ermittelt wird, gegenzeichnet dadurch, dass die Position des Aufsassen (20) auf dem Fahrzeug (10) als Funktion der Abweichung zwischen personenbezogenen und fahrzeugbezogenen Sensorsignalen ermittelt wird, wobei gleichartige Sensorsignale miteinander verglichen werden.

2. Verfahren nach Anspruch 1, **dadurch gekennzeichnet, dass** als Sensorsignale Beschleunigungswerte entlang der Längs-, Quer- und/oder Hochachse berücksichtigt werden.

3. Verfahren nach Anspruch 1 oder 2, **dadurch gekennzeichnet, dass** als Sensorsignale Drehraten um die Längs-, Quer- und/oder Hochachse berücksichtigt werden.

4. Verfahren nach einem der Ansprüche 1 bis 3, **dadurch gekennzeichnet, dass** zur Ermittlung der Position des Aufsassen (20) bei stillstehendem Fahrzeug (10) oder bei Fahrt mit konstanter Geschwindigkeit als Sensorsignale Beschleunigungswerte berücksichtigt werden.

5. Verfahren nach einem der Ansprüche 1 bis 4, **dadurch gekennzeichnet, dass** zur Ermittlung der Position des Aufsassen (20) bei bremsendem oder beschleunigendem Fahrzeug als Sensorsignale Beschleunigungswerte und zusätzlich der Neigungswinkel um die Querachse berücksichtigt werden.

6. Verfahren nach einem der Ansprüche 1 bis 5, **dadurch gekennzeichnet, dass** zur Ermittlung der Position des Aufsassen (20) bei Kurvenfahrt als Sensorsignale Beschleunigungswerte und zusätzlich der Neigungswinkel um die Längsachse berücksichtigt werden.

7. Verfahren nach einem der Ansprüche 1 bis 6, **dadurch gekennzeichnet, dass** die personenbezogenen Sensorsignale von einem in ein Bekleidungsstück oder in den Helm integrierten Personensensor (2, 3, 5, 6, 7) stammen.

8. Verfahren nach einem der Ansprüche 1 bis 7, **dadurch gekennzeichnet, dass** Kennlinien in einem die Fahrdynamik des Fahrzeugs (10) beeinflussenden Aggregat als Funktion der Position eines Aufsassen (20) auf dem Fahrzeug (10) eingestellt werden.

9. Verfahren nach einem der Ansprüche 1 bis 8, **dadurch gekennzeichnet, dass** selbsttätig ein Eingriff in die Fahrdynamik des Fahrzeugs (10) für den Fall durchgeführt wird, dass die Position des Aufsassen (20) auf dem Fahrzeug (10) von einer Sollposition abweicht.

10. Verfahren nach einem der Ansprüche 1 bis 9, **dadurch gekennzeichnet, dass** personenbezogene Sensorsignale mehrerer Personensensoren (2, 3, 5, 6, 7) versendet werden, die an verschiedenen Positionen am Körper des Aufsassen (20) angeordnet sind.

11. Positionsbestimmungssystem zur Bestimmung der Position eines Aufsassen (20) auf einem Fahrzeug (10) zur Durchführung des Verfahrens nach einem der Ansprüche 1 bis 10, mit einem Fahrzeugsensor (1) zur Erzeugung fahrzeugbezogener Sensorsignale, mit einem Personensensor (2, 3, 5, 6, 7) zur Erzeugung personenbezogener Sensorsignale und mit einem Steuergerät (4), dem die fahrzeugbezogenen und die personenbezogenen Sensorsignale zuführbar sind, wobei in dem Steuergerät (4) die Position des Aufsassen (20) auf dem Fahrzeug (10) als Funktion der personenbezogenen und der fahrzeugbezogenen Sensorsignale ermittelbar ist.

12. Positionsbestimmungssystem nach Anspruch 11, **dadurch gekennzeichnet, dass** mehrere Personensensoren (2, 3, 5, 6, 7) vorhanden sind, die zueinander beabstandet sind.

13. Fahrzeug, insbesondere motorisiertes Fahrzeug (10), vorzugsweise motorisiertes Zweirad, mit einem Positionsbestimmungssystem nach Anspruch 11 oder 12.

14. Computerprogrammprodukt mit einem Programmcode, der dazu ausgelegt ist, Schritte des Verfahrens nach einem der Ansprüche 1 bis 10 auszuführen, wenn das Computerprogrammprodukt in einem Steuergerät (4) des Positionsbestimmungssystems gemäß Anspruch 11 oder 12 abläuft.

## Claims

1. Method for determining the position of a rider (20) on a vehicle (10), in which person-related sensor signals are ascertained using at least one person sensor (2, 3, 5, 6, 7) carried by the rider (20) and vehicle-related sensor signals are ascertained using at least one vehicle sensor (1) arranged on the vehicle (10), wherein the position of the rider (20) on the vehicle (10) is ascertained as a function of the person-related sensor signals and the vehicle-related sensor signals, **characterized in that** the position of the rider (20) on the vehicle (10) is ascertained as a function of the difference between person-related sensor signals and vehicle-related sensor signals, wherein equivalent sensor signals are compared with one another.

2. Method according to Claim 1, **characterized in that** acceleration values along the longitudinal, transverse and/or vertical axis are taken into consideration as sensor signals.

3. Method according to Claim 1 or 2, **characterized in that** rotation rates about the longitudinal, transverse and/or vertical axis are taken into consideration as sensor signals.

4. Method according to one of Claims 1 to 3, **characterized in that** acceleration values are taken into consideration as sensor signals in order to ascertain the position of the rider (20) when the vehicle (10) is stationary or while travelling at a constant speed.

5. Method according to one of Claims 1 to 4, **characterized in that** acceleration values, and additionally the inclination angle about the transverse axis, are taken into consideration as sensor signals in order to ascertain the position of the rider (20) when the vehicle is braking or accelerating.

6. Method according to one of Claims 1 to 5, **characterized in that** acceleration values, and additionally the inclination angle about the longitudinal axis, are taken into consideration as sensor signals in order to ascertain the position of the rider (20) during cornering.

7. Method according to one of Claims 1 to 6, **characterized in that** the person-related sensor signals come from a person sensor (2, 3, 5, 6, 7) integrated into an item of clothing or into the helmet.

8. Method according to one of Claims 1 to 7, **characterized in that** characteristic curves are set in a unit influencing the driving dynamics of the vehicle (10) as a function of the position of a rider (20) on the vehicle (10).

9. Method according to one of Claims 1 to 8, **characterized in that** there is an automatic intervention in the driving dynamics of the vehicle (10) if the position of the rider (20) on the vehicle (10) deviates from a setpoint position.

10. Method according to one of Claims 1 to 9, **characterized in that** person-related sensor signals from a plurality of person sensors (2, 3, 5, 6, 7) that are arranged at different positions on the body of the rider (20) are sent.

11. Position determination system for determining the position of a rider (20) on a vehicle (10) for carrying out the method according to one of Claims 1 to 10, comprising a vehicle sensor (1) for generating vehicle-related sensor signals, comprising a person sensor (2, 3, 5, 6, 7) for generating person-related sensor signals, and comprising a control device (4) to which the vehicle-related sensor signals and the person-related sensor signals are able to be supplied, wherein the position of the rider (20) on the vehicle (10) is able to be ascertained in the control device (4) as a function of the person-related sensor signals and the vehicle-related sensor signals.

12. Position determination system according to Claim 11, **characterized in that** a plurality of person sensors (2, 3, 5, 6, 7) are present, which are spaced apart from one another.

13. Vehicle, in particular motorized vehicle (10), preferably motorized two-wheeled vehicle, comprising a position determination system according to Claim 11 or 12.

14. Computer program product comprising program code that is designed to carry out steps of the method according to one of Claims 1 to 10 when the computer program product runs in a control device (4) of the position determination system according to Claim 11 or 12.

## Revendications

1. Procédé de détermination de la position d'un usager (20) sur un véhicule (10), avec lequel des signaux de capteur relatifs à la personne sont déterminés à l'aide d'au moins un capteur de personne (2, 3, 5, 6, 7) porté par l'usager (20) et des signaux de capteur relatifs au véhicule sont déterminés à l'aide d'au moins un capteur de véhicule (1) disposé au niveau du véhicule (10), la position de l'usager (20) sur le véhicule (10) étant déterminée en fonction des signaux de capteur relatifs à la personne et des signaux de capteur relatifs au véhicule, **caractérisé en ce que** la position de l'usager (20) sur le véhicule (10) est déterminée en fonction de l'écart entre les signaux de capteur relatifs à la personne et les signaux de capteur relatifs au véhicule, des signaux de capteur de même type étant comparés entre eux.

2. Procédé selon la revendication 1, **caractérisé en ce que** des valeurs d'accélération le long de l'axe longitudinal, transversal et/ou vertical sont prises en compte en tant que signaux de capteur.

3. Procédé selon la revendication 1 ou 2, **caractérisé en ce que** des taux de rotation autour de l'axe longitudinal, transversal et/ou vertical sont pris en compte en tant que signaux de capteur.

4. Procédé selon l'une des revendications 1 à 3, **caractérisé en ce que** des valeurs d'accélération sont prises en compte en tant que signaux de capteur pour la détermination de la position de l'usager (20) lorsque le véhicule (10) est à l'arrêt ou lorsqu'il roule à vitesse constante.

5. Procédé selon l'une des revendications 1 à 4, **caractérisé en ce que** des valeurs d'accélération et en plus l'angle d'inclinaison autour de l'axe transversal sont pris en compte en tant que signaux de capteur pour la détermination de la position de l'usager (20) lorsque le véhicule freine ou accélère.

6. Procédé selon l'une des revendications 1 à 5, **caractérisé en ce que** des valeurs d'accélération et en plus l'angle d'inclinaison autour de l'axe longitudinal sont pris en compte en tant que signaux de capteur pour la détermination de la position de l'usager (20) lors d'un virage.

7. Procédé selon l'une des revendications 1 à 6, **caractérisé en ce que** les signaux de capteur relatifs à la personne proviennent d'un capteur de personne (2, 3, 5, 6, 7) intégré dans une pièce de vêtement ou dans le casque.

8. Procédé selon l'une des revendications 1 à 7, **caractérisé en ce que** des courbes caractéristiques sont réglées dans un groupe qui influence la dynamique de conduite du véhicule (10), en fonction de la position d'un usager (20) sur le véhicule (10).

9. Procédé selon l'une des revendications 1 à 8, **caractérisé en ce qu'**une intervention dans la dynamique de conduite du véhicule (10) est effectuée automatiquement dans le cas où la position de l'usager (20) sur le véhicule (10) s'écarte d'une position de consigne.

10. Procédé selon l'une des revendications 1 à 9, **caractérisé en ce que** des signaux de capteurs relatifs à la personne de plusieurs capteurs de personne (2, 3, 5, 6, 7) sont envoyés, lesquels sont disposés à différentes positions sur le corps de l'usager (20).

11. Système de détermination de position destiné à déterminer la position d'un usager (20) sur un véhicule (10) en vue de la mise en œuvre du procédé selon l'une des revendications 1 à 10, comprenant un capteur de véhicule (1) destiné à générer des signaux de capteur relatifs au véhicule, comprenant un capteur de personne (2, 3, 5, 6, 7) destiné à générer des signaux de capteur relatifs à la personne et comprenant un bloc de commande (4) auquel peuvent être acheminés les signaux de capteur relatifs au véhicule et les signaux de capteur relatifs à la personne, la position de l'usager (20) sur le véhicule (10) pouvant être déterminée dans le bloc de commande (4) en fonction des signaux de capteur relatifs à la personne et des signaux de capteur relatifs au véhicule.

12. Système de détermination de position selon la revendication 11, **caractérisé en ce que** plusieurs capteurs relatifs à la personne (2, 3, 5, 6, 7) sont présents, lesquels sont espacés les uns des autres.

13. Véhicule, notamment véhicule motorisé (10), de préférence deux-roues motorisé, comprenant un système de détermination de position selon la revendication 11 ou 12.

14. Produit programme informatique comprenant un code de programme qui est conçu pour exécuter des étapes du procédé selon l'une des revendications 1 à 10 lorsque le produit programme informatique est exécuté dans un bloc de commande (4) du système de détermination de position selon la revendication 11 ou 12.
